# EUROPÄISCHE PATENTANMELDUNG

(11) **EP 2 763 251 A1**
(43) Veröffentlichungstag der Anmeldung: **06.08.2014**
(21) Anmeldenummer: 14401006.3
(22) Anmeldetag: 28.01.2014
(51) Int. Cl.: H02B 13/00, H02G 5/06, H01R 13/53, H02G 15/02, H01B 7/16, H01B 13/004, H01B 13/06

(54) **Silikon isolierter und biegesteifer Vorrichtung zum Leiten von elektrischem Strom**

(30) Priorität: 30.01.2013 DE 102013100955
(71) Anmelder: E & A Elektrotechnik & Automatisierung GmbH, 01809 Dohna (DE)
(72) Erfinder:
(74) Vertreter: Sperling, Thomas

(57) **Zusammenfassung**

Die Erfindung betrifft eine Vorrichtung zum Leiten von elektrischem Strom. Die Vorrichtung weist einen elektrischen Leiter (6) zur Übertragung elektrischer Leistungen, welcher sich in einer Längsrichtung (L) erstreckt und an den Enden jeweils mit Anschlusselementen (9) ausgebildet ist, eine Isolierung (7a, 7b), welche den elektrischen Leiter (6) entlang der Längsrichtung (L) umschließt und aus einem Silikon als monolithisches Silikongusselement ausgebildet ist, sowie einen Außenleiter (8), welcher die Isolierung (7a) entlang der Längsrichtung (L) umschließt, auf. Der als biegesteifer Hohlzylinder ausgebildete Außenleiter (8) gewährleistet die mechanische Festigkeit sowie die Berührungssicherheit der Vorrichtung (1). Die Isolierung (7b) ist als Endverschluss ausgebildet, wobei die Enden des Außenleiters (8) jeweils von Isolierung (7b) umschlossen sind.

Des Weiteren betrifft die Erfindung ein Verfahren zur Herstellung der Vorrichtung (1).

## Beschreibung

Die Erfindung betrifft eine Vorrichtung zum Leiten von elektrischem Strom in Form einer feststoffisolierten Stromschiene. Die Vorrichtung weist einen elektrischen Leiter zur Übertragung elektrischer Leistungen, eine Isolierung und einen Außenleiter auf. Der sich in einer Längsrichtung erstreckende elektrische Leiter ist an den Enden jeweils mit Anschlusselementen ausgebildet und wird entlang der Längsrichtung von der Isolierung umschlossen. Die Isolierung wird wiederum entlang der Längsrichtung vom Außenleiter umhüllt.

Des Weiteren betrifft die Erfindung ein Verfahren zur Herstellung der Vorrichtung.

Aus dem Stand der Technik bekannte Stromschienensysteme für die Übertragung von hohen elektrischen Leistungen und den Transport von hohen elektrischen Strömen weisen Schienen aus einem isolierten elektrischen Leiter auf. Die Stromschienen sind an ihren Enden jeweils mit Anschlüssen zum Verbinden mit benachbart angeordneten Schienen oder anderen Komponenten, wie Schaltanlagen, Generatoren oder Transformatoren, ausgebildet. Als elektrische Leiter werden Hohlleiter oder Vollleiter aus Aluminium oder Kupfer verwendet. Die Leiter weisen dabei die Form von Zylindern auf.

Die Verwendung von Standardhohlleitern oder Vollleitern zum Stromtransport dient zur Vermeidung der Stromverdrängung, auch als Skin-Effekt bekannt. Dabei ist in von netzfrequentem Wechselstrom durchflossenen elektrischen Leitern die Stromdichte im Inneren des Leiters niedriger als an der Oberfläche, woraus sich die Form des Hohlleiters ableitet.

Die im Bereich der Mittelspannung von 10 kV bis 56 kV zum Transport von elektrischen Strömen zwischen 1.500 A und 10.000 A eingesetzten Hochstromschienen werden mit Isolationsmaterial, wie Epoxidharz als Feststoffisolierung oder dem Isoliergas Schwefelhexafluorid, auch als SF6 bekannt, umhüllt.

Als Isolierung werden beispielsweise unter Vakuum mit Gießharz imprägnierte Papierbandagen eingesetzt. Es ist bekannt, dass während der Herstellung der Isolierung, insbesondere während des Wickelvorganges der Papierbandagen, elektrisch leitende Beläge zur Feldsteuerung beziehungsweise zum Potentialausgleich in die Isolierung eingelegt werden. Des Weiteren wird ein aus einem Kupfergeflecht ausgebildeter Erdbelag in der Isolierung eingebettet, welcher das elektrische Feld zur Umgebung berührungssicher abschirmt. Abschließend werden die Schienen für den Einsatz in freier Umgebungsluft nach außen mit einem metallischen Rohr ummantelt. Gerade, ungebogene Schienen werden mit Aluminiumrohren, gebogene Schienen mit Schutzrohren aus gewelltem Blech überzogen. Die Außenrohre bieten der Stromschiene zusätzlich mechanischen Schutz.

Aus der DE 38 12 456 A1 geht eine mehrlagige Umhüllungsisolation aus Papier oder einem Vliesstoff für Hochspannung führende Leiter beliebiger Geometrie hervor. Die Umhüllungsisolation ist aus einer inneren und einer äußeren Isolierschicht ausgebildet. In den sogenannten Isolierwickel sind elektrisch leitende Einlagen zur Steuerung des Potentials eingebettet. Zur Gewährleistung einer durchgehend guten Isolation einschließlich der Endbereiche der Umhüllungsisolation ist es vorgesehen, für die äußere Isolierschicht ein gewelltes Rohr zu verwenden, welches mit der inneren Isolierschicht oder den inneren Isolierschichten zu einem fugenfreien Verbundkörper vereinigt ist. Der Verbundkörper umschließt den elektrischen Leiter. Das gewellte Rohr besteht aus einem elastischen und/oder thermoplastischen Material. Zur Bildung des fugenfreien Verbundisolierkörpers sind sämtliche Hohlräume zwischen der Innenwandung des gewellten Rohres und dem Isolierwickel mit einem Gießharz ausgefüllt und die Schichten aus Papier oder Vlies mit Gießharz vollständig durchtränkt.

Die einzelnen, mit Epoxidharz isolierten Stromschienen müssen maßangefertigt werden. Die Konstruktion und die Auslegung der Stromschienen erfolgen für die meisten Anwendungsfälle projektspezifisch beziehungsweise betreiberspezifisch jeweils separat.

Die feststoffisolierte Stromschiene, auch als Sammelschiene bezeichnet, wird im Mittelspannungsbereich bis 30 kV zur Übertragung hoher elektrischer Leistungen über kurze Distanzen eingesetzt. Zu den kurzen Distanzen kommen meist eine verwinkelte Anordnung der Übertragungswege und kompakte Anschlussräume der zu erschließenden Leistungskomponenten, wie Schaltanlagen, Generatoren oder Transformatoren, hinzu. Die Randbedingungen für die Übertragung von elektrischen Leistungen im Bereich von 10 MVA bis 600 MVA lassen den Einsatz von Mittelspannungskabelsystemen nicht zu. Die große Anzahl der parallelen Kabelsysteme steht dabei der Bedingung kompakter Anschlussräume und dem Platzbedarf für Kabeltrassen gegenüber. Die durch die verwinkelten Anordnungen gegebenen Verlegeradien stehen den Biegeradien der Mittelspannungskabel entgegen.

Im Stand der Technik werden deshalb die gas- oder epoxidharzisolierten Stromschienen für kurze verwinkelte Verbindungen, zum Transport von Strömen im Bereich von 1.500 A bis 10.000 A bei Spannungen von 10 kV, 20 kV beziehungsweise 30 kV verwendet.

Das Epoxidharz muss in ausreichender Stärke im Mehrstufenverfahren auf den elektrischen Leiter aufgebracht werden. Dabei müssen der Innenleiter erst gebogen und anschließend die Isolation schichtenweise aufgetragen werden. Das Epoxidharz muss zudem nach der Umhüllung des elektrischen Leiters über mehrere Tage aushärten. Zum Aushärten wird die umhüllte Stromschiene in bis zu 8 m langen Wärmeöfen behandelt. Ein mit ausgehärtetem Epoxidharz isolierter elektrischer Leiter ist nicht biegbar.

Die stark manuell orientierte Fertigungstechnologie der aufwendigen Herstellung der mit Epoxidharz isolierten Stromschienen erfordert folglich lange Fertigungszeiten.

Bei der Verwendung von SF6 als Isoliergas werden die elektrischen Leiter von einem äußeren Schutzrohr umgeben und beispielsweise mittels Hochspannungsisolatoren aus Gießharz im Außenrohr abgestützt. Das Isoliergas nimmt den Zwischenraum zwischen dem elektrischen Leiter und dem äußeren Schutzrohr ein. Die gasisolierten Stromschienen sind, wie die epoxidharzisolierten Stromschienen, nicht biegbar.

Die DE 2 118 840 A1 offenbart eine vollgekapselte Schaltanlage mit isolierten Stromschienen. Die Stromschienen sind in einem mit Druckgas, zum Beispiel SF6, gefüllten Gefäß angeordnet. In dem zwischen den Stromschienen und der Gefäßwandung befindlichen, mit Druckgas gefüllten Zwischenraum ist zudem ein fester Isolierstoff als unmittelbare Umhüllung des jeweiligen Stromleiters vorgesehen. Die Feststoffisolierung ist aus Polyethylen ausgebildet.

Bei der Herstellung elektrotechnischer Komponenten für den Hoch- und Mittelspannungsbereich gehören als Isolierstoff neben Epoxidharz auch Polyethylen und neben SF6 als Druckgas auch Vakuum, beispielsweise in einem Vakuumschalter, zum Stand der Technik.

Aufgabe der vorliegenden Erfindung ist es, eine Vorrichtung zum Leiten von hohen elektrischen Strömen und zur Übertragung von hohen elektrischen Leistungen bei minimalen Verlusten zur Verfügung zu stellen. Die Vorrichtung soll konstruktiv einfach und platzsparend sein, ein geringes Gewicht aufweisen sowie mit kurzen Fertigungszeiten kostengünstig herstellbar sein. Die Vorrichtung soll zudem sicher und feldfrei betreibbar sein und homogene Eigenschaften aufweisen.

Des Weiteren soll ein Verfahren zur Herstellung der Vorrichtung bereitgestellt werden.

Die Aufgabe wird durch eine erfindungsgemäße Vorrichtung zum Leiten von elektrischem Strom gelöst. Die Vorrichtung weist einen elektrischen Leiter zur Übertragung elektrischer Leistungen, eine Isolierung und einen Außenleiter auf. Der sich in einer Längsrichtung erstreckende elektrische Leiter ist an den beiden gegenüberliegenden Enden jeweils mit einem Anschlusselement ausgebildet. Die den elektrischen Leiter entlang der Längsrichtung umschließende Isolierung wird entlang der Längsrichtung wiederum vom Außenleiter umschlossen. Der elektrische Leiter, die Isolierung und der Außenleiter sind konzentrisch zueinander angeordnet.

Nach der Konzeption der Erfindung ist die Isolierung aus einem synthetischen Polymer, einem Silikon als monolithisches Silikongusselement, ausgebildet.

Der die Form eines Hohlzylinders aufweisende Außenleiter ist erfindungsgemäß als biegesteifer Erdbelag ausgebildet, welcher die mechanische Festigkeit sowie die Berührungssicherheit der Vorrichtung gewährleistet.

Die Isolierung ist zudem als Endverschluss der Vorrichtung ausgebildet. Die Enden des hohlzylinderförmigen Außenleiters sind dabei jeweils von der Isolierung umschlossen. Als Enden des Außenleiters sind die sich gegenüberliegenden Stirnseiten des Hohlzylinders zu verstehen.

Bei der als monolithisches Silikongusselement ausgebildeten Isolierung handelt es sich um ein einstückiges Element, welches vorteilhaft homogene Eigenschaften aufweist.

Die als Endverschlüsse geformten Bereiche der Isolierung weisen dabei bevorzugt Steuerbereiche mit Schirmformteilen zur Verlängerung des Kriechweges von Fehlströmen an der Außenseite auf.

Der bevorzugt aus Aluminium gefertigte Außenleiter stellt eine durchverbundene Kapselung der Vorrichtung nach außen dar. Mit der durchverbundenen Kapselung wird beim Betrieb in einem System aus parallel zueinander angeordneten und elektrisch parallel geschalteten Vorrichtungen vorteilhaft eine nahezu magnetische Feldfreiheit erreicht. In der Umgebung der Vorrichtungen tritt durch die beidseitig kurzgeschlossenen und geerdeten Außenleiter kein elektromagnetisches Feld auf.

Der elektrische Leiter, die Isolierung und der Außenleiter der Vorrichtung sind bevorzugt für elektrische Spannungen im Bereich von 6 kV bis 56 kV und für elektrische Ströme im Bereich von 1,5 kA bis 10 kA konfiguriert. Damit lassen sich in einem Drehstromsystem vorteilhaft elektrische Leistungen im Bereich von 15 MVA bis 1000 MVA übertragen.

Nach einer vorteilhaften Ausgestaltung der Erfindung sind der elektrische Leiter zylinderförmig und die Isolierung derart hohlzylinderförmig ausgebildet, dass der elektrische Leiter in Längsrichtung vollständig von der Isolierung umgeben ist. Der elektrische Leiter ist innerhalb der Isolierung integriert gehaltert. Die Wandstärke der Isolierung um den elektrischen Leiter ist bevorzugt konstant.

Nach einer weiteren Ausgestaltung der Erfindung weisen die Enden des Außenleiters jeweils ein Profil zur Feldsteuerung auf, um tangentiale elektrische Beanspruchungen an den Grenzflächen zu minimieren. Das Profil ist vorteilhaft als Borda-Profil ausgebildet.

Nach einer Weiterbildung der Erfindung ist der elektrische Leiter als Millikenleiter aus verseilter Aluminiumlitze ausgebildet.

Durch die vorteilhaft voneinander isolierten Einzeldrähte fließt jeweils Strom gleicher Stärke, sodass sich die beim Stromfluss zwischen den Einzeldrähten induzierten Spannungen kompensieren.

Die voneinander isolierten Einzeldrähte sind bevorzugt abwechselnd innen und außen des Gesamtquerschnittes des Leiters angeordnet.

Der elektrische Leiter mit den Anschlusselementen, die Isolierung und der Außenleiter sind vorteilhaft als zusammenhängender Verbundkörper ausgebildet. Die Vorrichtung wird in der Form des Verbundkörpers gelagert, transportiert, weiterverarbeitet und am Einsatzort installiert.

Bei einem System aus den erfindungsgemäßen Vorrichtungen sind die Vorrichtungen elektrisch parallel zueinander geschaltet und räumlich parallel zueinander angeordnet. Dabei sind jeweils die Endbereiche der als durchverbundene Kapseln ausgebildeten Außenleiter elektrisch miteinander verbunden und geerdet. Mittels der beidseitig angeordneten elektrischen Verbindungen der Endbereiche der Außenleiter, auch als Kurzschluss bezeichnet, kann das System magnetisch feldfrei betrieben werden. Beim Betrieb tritt somit kein elektromagnetisches Feld auf.

Das erfindungsgemäße Verfahren zur Herstellung einer Vorrichtung zum Leiten von hohen elektrischen Strömen umfasst folgende Schritte:
- Anpassen der Länge eines als Hohlzylinder ausgebildeten Außenleiters an eine vorbestimmte Länge und
- Formen der Enden des Außenleiters zu einem Profil zur elektrischen Feldsteuerung,
- Bereitstellen eines sich in einer Längsrichtung erstreckenden elektrischen Leiters und
- Verbinden der Enden des elektrischen Leiters mit Anschlusselementen,
- Einbringen des elektrischen Leiters in den Außenleiter, sodass der elektrische Leiter konzentrisch im Außenleiter angeordnet ist und
- Verfüllen des Zwischenraumes zwischen dem elektrischen Leiter und dem Außenleiter durch Vergießen mit einem Silikon als Isolierung.

Die zu einem Profil zur elektrischen Feldsteuerung ausgebildeten Enden des Außenleiters weisen vorteilhaft die Form eines sogenannten Borda-Profils auf. Die derart abgerundeten Enden des Außenleiters bewirken, dass die Feldstärke über den gesamten Außenleiter konstant beziehungsweise homogen bleibt.

Nach einer Ausgestaltung der Erfindung wird der elektrische Leiter aus Einzeldrähten als Millikenleiter gefertigt. Dabei werden die Einzeldrähte voneinander isoliert und als eine Litze angeordnet. Anschließend werden die Enden des elektrischen Leiters mit den Anschlusselementen versehen.

Der Zwischenraum zwischen den konzentrisch angeordneten elektrischem Leiter und Außenleiter wird vorteilhaft mittels einer Befülleinrichtung mit gießbarem Silikon verfüllt.

Die Vorrichtung kann mit unterschiedlichen Längen hergestellt werden. Die Vorfertigung ermöglicht das Lagern verschieden langer Vorrichtungen, sodass bei Bedarf flexibel und schnell auf räumliche Umstände am Einbauort reagiert werden kann.

Die mit Silikon vergossene Vorrichtung kann folglich vorteilhaft am Einbauort an die räumlichen Gegebenheiten angepasst werden. Die Vorrichtung wird als zusammenhängender Verbundkörper je nach Bedarf vor Ort gebogen. Zum Biegen wird bevorzugt eine Biegeeinrichtung verwendet. Zudem werden nacheinander angeordnete und in Reihe geschaltete Vorrichtungen an den Übergängen mittels Verbindungselementen, auch als Muffen bezeichnet, mechanisch und elektrisch gekoppelt und verbunden. Die zu einem System zusammengefügten Vorrichtungen werden mit Leiterfixierungen in ihrer Einbauposition gehaltert.

Die Vorteile der Erfindung gegenüber dem Stand der Technik lassen sich folgendermaßen zusammenfassen. Der elektrische Leiter ist als Litze, bevorzugt aus Aluminium, zu einer Stromschiene verseilt und flexibel verformbar. Unter Ausnutzung des Millikeneffektes kann der, insbesondere bei einer Frequenz von 50 Hz und Leiterquerschnitten ab 1000 mm², auftretende Skin-Effekt weitestgehend vermieden werden.

Die biegesteife Ausbildung des Außenleiters mit geringen Wandstärken und das Vergießen des Zwischenraumes zwischen dem elektrischen Leiter und dem Außenleiter mit einem Silikon als eine monolithische Isolierung ermöglichen, die Vorrichtung vorzufertigen, zu lagern, zu transportieren und je nach Bedarf auch vor Ort zu biegen und damit an die örtlichen Gegebenheiten anzupassen. Die aus Silikon ausgebildete Isolierung kann an der Umgebungsluft aushärten.

Die Erfindung ist damit im Vergleich zum Stand der Technik weniger aufwendig in der Herstellung, da beispielsweise kein Wärmeofen, wie bei mit Epoxidharz isolierten Stromschienen, notwendig ist. Die Herstellung und die Montage sind preiswerter und weniger zeitaufwendig. Zudem ist mit dem Einsatz von Millikenleitern als elektrische Leiter im Vergleich zu Hohlleitern der geometrische Aufbau der gesamten Vorrichtung kleiner und somit ressourcenschonender und platzsparender.

Die Vorrichtung ist als ein feststoffisoliertes Stromschienensystem mit Silikon als Isolierstoff für die Energieverteilung bei Mittelspannung einsetzbar.

Weitere wesentliche Vorteile sind:
- automatisierbare Herstellung der Vorrichtung und schnelle Fertigung durch Verwendung vorgefertigter Werksnormteile,
- Isoliermaterialien mit kontinuierlich homogenen Eigenschaften,
- kurze Fertigungszeiten mit reproduzierbarer Qualität der Vorrichtungen,
- Berührungssicherheit der Vorrichtung,
- Einsparung abgeschlossener elektrischer Betriebsräume,
- Wartungsfreiheit sowie
- kein elektromagnetisches Feld außerhalb der beidseitig kurzgeschlossenen Außenleiter infolge der durchverbundenen Kapselung und damit elektromagnetisch verträglich.

Weitere Einzelheiten, Merkmale und Vorteile der Erfindung ergeben sich aus der nachfolgenden Beschreibung von Ausführungsbeispielen mit Bezugnahme auf die zugehörigen Zeichnungen. Es zeigen die feststoffisolierte Stromschiene:
- Figur 1:: in Anwendung innerhalb eines umbauten Raumes,
- Figur 2a:: im Prinzipaufbau,
- Figur 2b:: in Schnittdarstellung in Längsrichtung und
- Figur 3:: im Querschnitt.

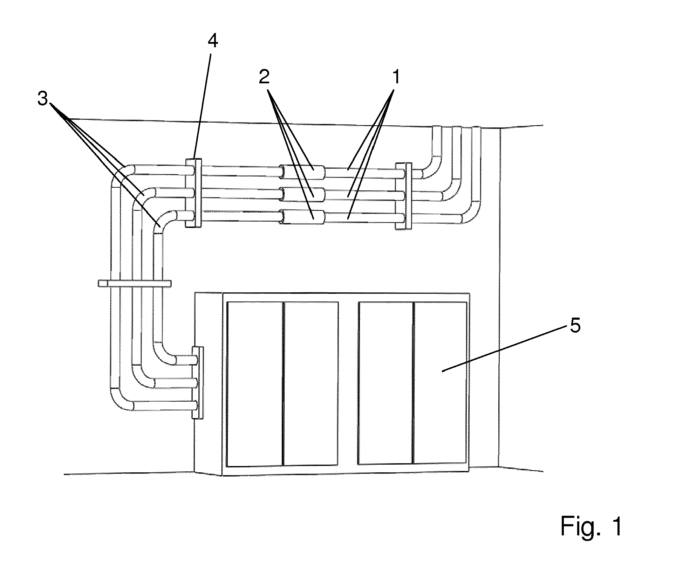

In **Figur 1** sind feststoffisolierte Stromschienen 1 als Verbund in einem Stromschienensystem dargestellt. Die Stromschienen 1 sind mit einer Schaltanlage 5 verbunden.

In geraden, ungebogenen Bereichen sind in Längsrichtung der Stromschiene jeweils zwei benachbart angeordnete Stromschienen 1 über Verbindungselemente 2 mechanisch und elektrisch miteinander gekoppelt. An gerade Bereiche der Stromschiene 1 grenzen gebogene Bereiche beziehungsweise Bögen 3 an, sodass verwinkelte Anordnungen und Verbindungen der Stromschienen 1 innerhalb des umbauten Raumes erstellt werden können.

Die Stromschienen 1 sind in geraden Bereichen durch Halterungen 4 an der Wand gehaltert und zueinander beabstandet angeordnet.

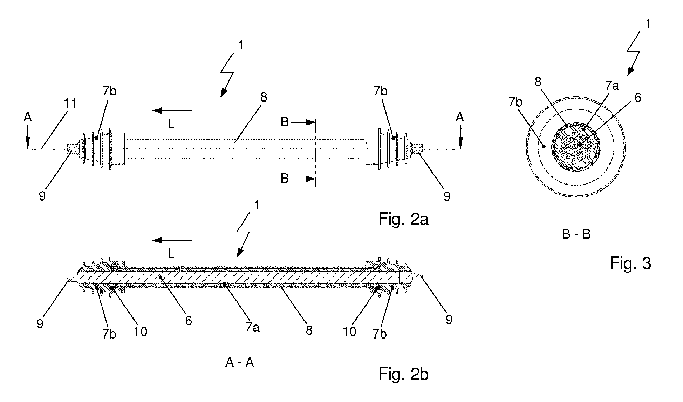

Die **Figuren 2a, 2b und 3** zeigen die feststoffisolierte Stromschiene 1 im Prinzipaufbau sowie in Schnittdarstellungen in Längsrichtung L und im Querschnitt. Der Querschnitt ist in Figur 3 vergrößert dargestellt.

Die Stromschiene 1 ist koaxial um die Längsachse 11 aus einem zylindrischen Leiter 6 zur Stromübertragung, eine den Leiter 6 umschließende hohlzylinderförmige Isolierung 7a sowie einen die Isolierung 7a umschließenden Außenleiter 8 ausgebildet.

Der die Form eines Rundzylinders aufweisende Leiter 6 ist an den Enden in Längsrichtung L der Stromschiene 1 jeweils mit Anschlusselementen 9 versehen. Der Leiter 6 kann dabei ebenso in beliebigen anderen Zylinderformen ausgebildet sein. Die Anschlusselemente 9 weisen die Form eines Flachanschlusses auf, sodass der Querschnitt des Leiters 6 von einem Kreis auf ein Rechteck übergeht. Die Ausbildung der Anschlusselemente 9 beispielsweise als Rundbolzen oder Steckanschluss ist ebenso möglich.

Wie aus den Figuren 2b und 3 hervorgeht, weist die Stromschiene 1 einen flexiblen Leiter 6 als Innenleiter aus verseilter Aluminiumlitze zur Stromübertragung auf. Der Leiter 6 ist als Millikenleiter ausgebildet, was insbesondere in Figur 3 offenbart ist. Die voneinander isolierten Einzeldrähte sind abwechselnd innen und außen des Gesamtquerschnittes des Leiters 6 angeordnet. Die Einzeldrähte, durch welche jeweils Strom gleicher Stärke fließt, sind voneinander isoliert. Die beim Stromfluss zwischen den Einzeldrähten induzierten Spannungen sind nahezu gleich groß. Unter Ausnutzung des Millikeneffektes wird der Einfluss des Skin-Effekts minimiert oder vermieden und für den Stromtransport ist der Gesamtquerschnitt des Leiters nutzbar. Auch der auftretende Proximity-Effekt wird auf ein Minimum reduziert oder vermieden. Unter dem Proximity-Effekt ist dabei die Wirkung der Stromeinschnürung oder Stromverdrängung zwischen zwei eng benachbart angeordneten Leitern unter dem Einfluss von Wechselströmen aufgrund des magnetischen Streuflusses zwischen den Leitern zu verstehen. Der magnetische Streufluss wird durch entgegengesetzt ausgerichtete Ströme in den Leitern verursacht.

Die aus dünneren Einzeldrähten ausgebildete Litze ist zudem im Gegensatz zu einem Vollleiter ein leicht zu biegender elektrischer Leiter 6, welcher zudem geringer dimensioniert werden kann und damit platzsparend ist.

Der Leiter 6 ist koaxial um die Längsachse 11 von der hohlzylinderförmigen Isolierung 7a, 7b umschlossen. Die kontinuierlich homogene Eigenschaften aufweisende Isolierung 7a, 7b ist aus gießbaren und hochspannungsfestem Silikon ausgebildet. Aufgrund des Einsatzes eines monolithischen Silikongusses zur Spannungsisolation mit hydrophoben und dielektrischen Eigenschaften sowie sehr hohen Durchschlagfestigkeiten weist die Stromschiene 1 geringere Abmessungen als herkömmliche, zum Beispiel mit Epoxidharz isolierte, Stromschienen auf. Die Stromschiene 1 ist einfacher zu handhaben und weist infolge der leichteren Isolierung 7a, 7b ein geringeres Gewicht auf.

Der als Litze ausgebildete Leiter 6 bleibt auch mit der Isolierung 7a, 7b infolge des flexibel verformbaren Silikons leicht biegbar.

Die Isolierung 7a ist von einem aus Aluminium ausgebildeten Außenleiter 8 umschlossen, welcher konzentrisch um die Längsachse 11 angeordnet ist. Der Außenleiter 8 weist die Form eines Rohres, das heißt eines Hohlzylinders, auf und gewährleistet als Erdbelag die Berührungssicherheit der Stromschiene 1 im Betrieb. Der biegesteife Außenleiter 8 dient der mechanischen Festigkeit der Stromschiene 1.

Wie Figur 2b zeigt, weist der Außenleiter 8 über die gesamte Länge eine einheitliche Wandstärke auf und ist derart koaxial um den elektrischen Leiter 6 angeordnet, dass der Abstand zwischen dem elektrischen Leiter 6 und dem Außenleiter 8 ebenfalls über der gesamten Länge konstant ist. Dieser zwischen dem Leiter 6 und dem Außenleiter 8 ausgebildete Ringraum ist vollständig mit Silikon als Isolierung 7a ausgefüllt. Der Außenleiter 8 erstreckt sich dabei in Längsrichtung L der Stromschiene 1 zwischen der jeweils als Endverschluss ausgebildeten Isolierung 7b.

Die Endverschlüsse 7b, welche als Verbund aus einem Stück mit der Isolierung 7a und aus dem gleichen Material wie die Isolierung 7a gefertigt sind, umschließen die Übergangsbereiche des elektrischen Leiters 6 konzentrisch. In den Übergangsbereichen ist die Aluminiumlitze jeweils mit den massiven Anschlusselementen 9 verbunden.

Die Isolierung 7b erstreckt sich dabei vom Übergang des Querschnitts des elektrischen Leiters 6 von einem Kreis auf ein Rechteck bis zum Außenleiter 8 und umschließt den Außenleiter 8 an seinen Enden auf der Außenseite. Die Isolierung 7b schließt sich folglich an den Enden des Außenleiters 8 in Längsrichtung L an den Außenleiter 8 an. Der Außenleiter 8 ist dabei an den beiden gegenüberliegenden Enden jeweils von Isolierung 7b umschlossen. Die Enden des Außenleiters 8, welche jeweils ein Profil 10 zur Feldsteuerung aufweisen, sind in der Isolierung 7b integriert. Die Wandstärke der Isolierung 7b nimmt in der Richtung vom Übergang des Querschnitts des elektrischen Leiters 6 zum Außenleiter 8 zu.

Die Feldsteuerung wird auch als Absteuerung bezeichnet. Mit dem Profil 10 der Feldsteuerung werden tangentiale elektrische Beanspruchungen an den Grenzflächen minimiert.

In den zueinander ausgerichteten Enden der Isolierung 7b sind somit die an den Enden des Außenleiters 8 ausgebildeten Profile 10 zur elektrischen Feldsteuerung eingebettet.

Die Endverschlüsse 7b der Stromschiene 1 sind als Steuerbereiche mit Schirmformteilen zur Verlängerung des Kriechweges von Fehlströmen beziehungsweise der Unterbindung von Kriechströmen ausgebildet. Das Fortschreiten einer kriechenden Entladung längs des überzogenen oder bedeckten elektrischen Leiters 6 wird durch Barrieren verhindert. Die Barrieren sind folglich zur Verlängerung des Kriechweges vorgesehen und in Form von radial nach außen ausgerichteten, scheibenförmigen Vorsprüngen ausgebildet. Die Vorsprünge sind senkrecht zur Längsachse L angeordnet. Damit wird ein Ausbreiten von Kriechströmen in Längsrichtung L, insbesondere in den kritischen Endbereichen der Isolation 7b, minimiert.

Der durchgehende Außenleiter 8, auch als Außenleiterbelag oder Erdbelag bezeichnet, welcher sich sowohl über den gesamten Umfang als auch über die gesamte Länge der Stromschiene 1 erstreckt, ist als eine durchverbundene Kapsel der Stromschiene 1 ausgebildet. Mittels einer elektrischen Verbindung von parallel zueinander angeordneter Stromschienen 1 wird eine ausreichende Erdung beziehungsweise Feldsteuerung sichergestellt. Die Außenleiter 8 sind dabei jeweils an den Endbereichen der Stromschienen 1 elektrisch miteinander verbunden und geerdet. Damit sind keine weiteren Maßnahmen für die Anlagen- und/oder Personensicherheit erforderlich.

Eine einseitige elektrische Verbindung und Erdung der parallel zueinander angeordneten Stromschienen 1 würde an den gegenüberliegenden Endbereichen der Stromschienen 1 ein Spannungspotential erzeugen. Mit Hilfe des Kurzschlusses und der Erdung der jeweils zweiten Endbereiche der Stromschienen 1 fließt durch die Außenleiter 8 der Stromschienen 1 ein Strom, welcher in der entgegengesetzten Richtung des zu transportierenden Stromes im Inneren der Stromschiene 1, innerhalb des elektrischen Leiters 6, ausgerichtet ist. Die magnetischen Felder heben sich gegenseitig auf. Damit wird das Stromschienensystem feldfrei betrieben. Mittels der durchverbundenen Kapselung wird eine magnetische Feldfreiheit erzielt. Außerhalb der Stromschienen 1 tritt durch die beidseitig kurzgeschlossenen Außenleiter 8 kein elektromagnetisches Feld auf.

### LISTE DER BEZUGSZEICHEN

- 1: Vorrichtung zum Leiten von elektrischem Strom, Stromschiene für ein Hochstromschienensystem
- 2: Verbindungselement
- 3: Bogen
- 4: Halterung
- 5: Schaltanlage
- 6: Leiter zur Stromübertragung
- 7a: Isolierung
- 7b: Isolierung, Endverschluss
- 8: Außenleiter
- 9: Anschlusselement
- 10: Profil zur elektrischen Feldsteuerung
- 11: Längsachse

- L: Längsrichtung

## Patentansprüche

1. Vorrichtung (1) zum Leiten von elektrischem Strom, aufweisend
- einen elektrischen Leiter (6) zur Übertragung elektrischer Leistungen, welcher sich in einer Längsrichtung (L) erstreckt und an den Enden jeweils mit einem Anschlusselement (9) ausgebildet ist,
- eine Isolierung (7a, 7b), welche den elektrischen Leiter (6) entlang der Längsrichtung (L) umschließt und aus einem Silikon als monolithisches Silikongusselement ausgebildet ist,
- einen Außenleiter (8), welcher die Isolierung (7a) entlang der Längsrichtung (L) umschließt und als biegesteifer Hohlzylinder ausgebildet ist, welcher die mechanische Festigkeit sowie die Berührungssicherheit der Vorrichtung (1) gewährleistet, wobei die Isolierung (7b) als Endverschluss ausgebildet und die Enden des Außenleiters (8) jeweils von Isolierung (7b) umschlossen sind.

2. Vorrichtung (1) nach Anspruch 1, **dadurch gekennzeichnet, dass** die Enden des Außenleiters (8) mit einem Profil (10) zur Feldsteuerung ausgebildet sind.

3. Vorrichtung (1) nach Anspruch 1 oder 2, **dadurch gekennzeichnet, dass** der elektrische Leiter (6) als Millikenleiter aus verseilter Aluminiumlitze ausgebildet ist.

4. Vorrichtung (1) nach Anspruch 3, **dadurch gekennzeichnet, dass** der elektrische Leiter (6) aus voneinander isolierten Einzeldrähten ausgebildet ist.

5. Vorrichtung (1) nach Anspruch 4, **dadurch gekennzeichnet, dass** die voneinander isolierten Einzeldrähte abwechselnd innen und außen des Gesamtquerschnittes des Leiters (6) angeordnet sind.

6. Verfahren zur Herstellung einer Vorrichtung (1) zum Leiten von hohem elektrischem Strom nach einem der Ansprüche 1 bis 5, welches folgende Schritte aufweist:
- Anpassen der Länge eines als Hohlzylinder ausgebildeten Außenleiters (8) an eine vorbestimmte Länge und
- Formen der Enden des Außenleiters (8) zu einem Profil (10) zur elektrischen Feldsteuerung,
- Bereitstellen eines sich in einer Längsrichtung (L) erstreckenden elektrischen Leiters (6) und
- Verbinden der Enden des elektrischen Leiters (6) mit Anschlusselementen (9),
- Einbringen des elektrischen Leiters (6) in den Außenleiter (8), sodass der elektrische Leiter (6) konzentrisch im Außenleiter (8) angeordnet ist und
- Verfüllen des Zwischenraumes zwischen dem elektrischen Leiter (6) und dem Außenleiter (8) durch Vergießen mit einem Silikon als Isolierung (7a, 7b).

7. Verfahren nach Anspruch 6, **dadurch gekennzeichnet, dass** die Isolierung (7a, 7b) als monolithisches Silikongusselement ausgebildet wird.

8. Verfahren nach Anspruch 6 oder 7, **dadurch gekennzeichnet, dass** die Isolierung (7b) als Endverschluss ausgebildet wird und die Enden des Außenleiters (8) umschließt.

9. Verfahren nach einem der Ansprüche 6 bis 8, **dadurch gekennzeichnet, dass** der elektrische Leiter (6) als Millikenleiter aus voneinander isolierten Einzeldrähten gefertigt wird.

10. Verfahren nach einem der Ansprüche 6 bis 9, folgenden Schritt umfassend:
- Biegen der mit Silikon vergossenen Vorrichtung (1) und Anpassen an die räumlichen Gegebenheiten am Einsatzort.
